# EUROPEAN PATENT APPLICATION

(11) **EP 4 807 437 A1**
(43) Date of publication of application: **16.09.2026**
(21) Application number: 25895341.3
(22) Date of filing: 24.10.2025
(51) Int. Cl.: G02F 1/13357, G02F 1/00, C09K 11/02, C09K 11/70, C09D 4/00, C09D 7/61, C09D 7/40, C08F 222/10

(54) **QUANTUM DOT OPTICAL SHEET, AND BACKLIGHT UNIT AND DISPLAY DEVICE COMPRISING SAME**

(30) Priority: 20.11.2024 KR 20240166077
(71) Applicant: Hansol Chemical Co., Ltd, Seoul 06169 (KR)
(72) Inventor: NAM, Kyoung Mo, Wanju-gun, Jeonbuk-do 55321 (KR); YUN, Mi Hee, Wanju-gun, Jeonbuk-do 55321 (KR); SHIN, Jin Ho, Wanju-gun, Jeonbuk-do 55321 (KR); AN, Jae Yong, Wanju-gun, Jeonbuk-do 55321 (KR); BAE, Yun Ju, Wanju-gun, Jeonbuk-do 55321 (KR); KIM, Gil Ran, Wanju-gun, Jeonbuk-do 55321 (KR)
(74) Representative: Cabinet Beau de Loménie
(86) International application number: PCT/KR2025/017045
(87) International publication number: WO 2026/111213

(57) **Abstract**

A quantum dot optical sheet and a backlight unit and display device including the same are disclosed. The quantum dot optical sheet has excellent properties both in thermal stability and barrier characteristics without using a high cost conventional barrier film, and can be effectively applied to manufacture of backlight units and display devices, thereby providing a high-quality display device while reducing manufacturing costs thereof.

## Description

### [Technical Field]

The present invention relates to a quantum dot optical sheet and a backlight unit and display device including the same.

### [Background Art]

Quantum dots (QDs), also known as semiconductor nanocrystals, can emit various colors through generation of light with different wavelengths depending on particle size and have advantages of better color purity and photostability than typical light emitting materials, thereby attracting attention as next generation light emitting elements.

In particular, as a new trend in the field of displays, quantum dots may be applied to various displays, electronic devices, and the like as well as TVs and LEDs. Quantum dots represented by CdSe, InP, and the like have achieved rapid improvement in luminous efficacy (quantum yield) and various methods for synthesis of quantum dots with luminous efficacy close to 100% have been introduced in the art. As a result, TVs including quantum dot sheets have been commercialized in the art.

Since such quantum dots are vulnerable to external factors, such as oxygen, moisture, heat, and the like, from an external environment and suffer from deterioration in luminance and significant change in color coordinates when exposed to the external environment for a long period of time, it has been essential to use a barrier film to protect the quantum dots. However, a barrier film with a very high level of barrier characteristics is relatively expensive, causing increase in manufacturing costs of quantum dot sheets.

To compensate for vulnerability of quantum dots to an external environment while reducing manufacturing costs of a quantum dot optical sheet, it has been proposed to introduce quantum dots into a substrate containing a polymer material. However, it is not easy for such a quantum dot optical sheet to satisfy both thermal stability and a high level of barrier characteristics.

Therefore, there is a need for development of a novel quantum dot optical sheet that can satisfy both thermal stability and barrier characteristics while solving the problem of the high cost of conventional barrier films.

### [Disclosure]

### [Technical Problem]

It is one object of the present invention to provide a quantum dot optical sheet that has excellent properties in terms of both thermal stability and barrier characteristics while replacing a high cost conventional barrier film.

It is another object of the present invention to provide a quantum dot optical sheet that does not suffer from deterioration in luminance and significant change in color coordinates even when exposed to an external environment for a long period of time.

It is a further object of the present invention to provide a display device including the quantum dot optical sheet.

However, it should be understood that the present invention is not limited to the above objects, and the above and other objects will become apparent to those skilled in the art from the following description.

### [Technical Solution]

In accordance with one aspect of the present invention, a quantum dot optical sheet includes: a first substrate; a first barrier layer formed on the first substrate; a second substrate disposed opposite the first substrate; a second barrier layer formed on the second substrate; and a photoconversion layer interposed between the first barrier layer and the second barrier layer, wherein each of the first barrier layer and the second barrier layer includes a cured product of a composition for barrier layers including a (meth)allyl based monomer, a monomer having at least two thiol groups at terminal ends thereof, metal oxide nanoparticles, and a first photoinitiator, and wherein the photoconversion layer includes a cured product of a composition for photoconversion layers including quantum dots, a bisphenol based monomer, a cyclizable monomer, and a second photoinitiator.

In the quantum dot optical sheet, the (meth)allyl based monomer may include at least one selected from the group consisting of triallyl isocyanurate, 1,3-diallyl-5-glycidyl isocyanurate, diallylpropyl isocyanurate, and trimethallyl isocyanurate.

In the quantum dot optical sheet, the monomer having at least two thiol groups at the terminal ends thereof may include at least one selected from the group consisting of pentaerythritol tetrakis(2-mercaptoacetate), pentaerythritol tetrakis(3-mercaptopropionate), 1,2-ethanedithiol, pentaerythritol tetrakis(mercaptopropionate), pentaerythritol tetrakis(thioglycolate), trimethylolpropane tris(2-mercaptoacetate), and trimethylolpropane tris(3-mercaptopropionate).

In the quantum dot optical sheet, the metal oxide nanoparticles may include at least one selected from the group consisting of titanium oxide, aluminum oxide, chromium trioxide, zinc oxide, copper oxide, magnesium oxide, zirconium dioxide, molybdenum trioxide, vanadium pentoxide, niobium pentoxide, and tantalum pentoxide.

In the quantum dot optical sheet, the quantum dots may be cadmium-free quantum dots.

In the quantum dot optical sheet, the quantum dots may have a ligand layer on a surface thereof, and the ligand layer may include at least one selected from the group consisting of a carboxylic acid based compound, a thiol based compound, a phosphine based compound, a phosphine oxide based compound, and an amine based compound.

In the quantum dot optical sheet, the cyclizable monomer may include at least one selected from the group consisting of alkyl 2-[(allyloxy)methyl](meth)acrylate, hydroxyalkyl 2-[(allyloxy)methyl](meth)acrylate, haloalkyl 2-[(allyloxy)methyl](meth)acrylate, cycloalkyl 2-[(allyloxy)methyl](meth)acrylate, aryl 2-[(allyloxy)methyl](meth)acrylate, alkoxyalkyl 2-[(allyloxy)methyl](meth)acrylate, alkoxycycloalkyl 2-[(allyloxy)methyl](meth)acrylate, and oxacycloalkyl 2-[(allyloxy)methyl](meth)acrylate.

In the quantum dot optical sheet, the composition for photoconversion layers may further include at least one selected from the group consisting of a bifunctional (meth)acrylate monomer, a trifunctional (meth)acrylate monomer, and a tetra- or higher functional (meth)acrylate monomer.

In the quantum dot optical sheet, the quantum dot optical sheet may have a luminance retention rate (ΔLm) of 95% or more; an x-axis color coordinate change (ΔCx) of -0.005 ≤ ΔCx ≤ 0.005; and a y-axis color coordinate change (ΔCy) of -0.005 ≤ ΔCy ≤ 0.005, after being exposed to light at a wavelength of 450 nm for 616 hours.

In the quantum dot optical sheet, the quantum dot optical sheet may have a luminance retention rate (ΔLm) of 90% or more; an x-axis color coordinate change (ΔCx) of -0.010 ≤ ΔCx ≤ 0.010; and a y-axis color coordinate change (ΔCy) of -0.010 ≤ ΔCy ≤ 0.010, after being exposed to a condition of 60°C and 95% humidity for 616 hours.

In the quantum dot optical sheet, the quantum dot optical sheet may have a luminance retention rate (ΔLm) of 90% or more; an x-axis color coordinate change (ΔCx) of -0.015 ≤ ΔCx ≤ 0.015; and a y-axis color coordinate change (ΔCy) of -0.015 ≤ ΔCy ≤ 0.015, after being exposed to a condition of 60°C for 616 hours.

In accordance with another aspect of the present invention, there is provided a backlight unit including the quantum dot optical sheet.

In accordance with a further aspect of the present invention, there is provided a display device including the backlight unit.

### [Advantageous Effects]

A quantum dot optical sheet according to the present invention includes a barrier layer containing metal oxide nanoparticles, and a photoconversion layer containing quantum dots and a polymer matrix with enhanced thermal stability, thereby satisfying excellent properties in terms of both thermal stability and barrier characteristics without using a high cost conventional barrier film.

In addition, the quantum dot optical sheet according to the present invention does not suffer from deterioration in luminance and significant change in color coordinates even when exposed to an external environment for a long period of time.

Furthermore, the quantum dot optical sheet according to the present invention has good properties in terms of both thermal stability and barrier characteristics without using a high cost conventional barrier film and thus can be effectively applied to manufacture of backlight units and display devices, thereby providing high-quality display devices while reducing manufacturing costs.

### [Description of Drawings]

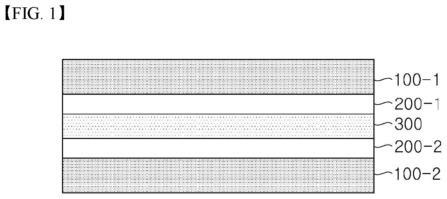

FIG. 1 is a cross-sectional view of a laminate structure of a quantum dot optical sheet according to the present invention.

### [Best Mode]

Unless otherwise defined herein, all terms (including technical and scientific terms) used herein have the same meaning as commonly understood by one of ordinary skill in the art to which this disclosure pertains. Terms, such as those defined in commonly used dictionaries, should be interpreted as having a meaning that is consistent with their meaning in the context of the related art and should not be interpreted in an idealized or overly excessive sense, unless clearly defined herein.

In addition, as used herein, the terms "comprises," "comprising," "includes," and/or "including" specify the presence of stated elements and/or steps, but do not preclude the presence or addition of at least one other element and/or step.

In addition, the singular forms "a," "an" and "the" are intended to include the plural forms as well, unless context clearly indicates otherwise. For example, as used herein, "substrate" may refer to at least one substrate among a first substrate and a second substrate, and "barrier layer" may refer to at least one barrier layer among a first barrier layer and a second barrier layer.

In addition, spatially relative terms, such as "below," "lower surface," "beneath," "on," "upper surface," "above," and the like, may be used herein for descriptive purposes, and, thereby, to describe one element's relationship to other element(s) as illustrated in the drawings. Spatially relative terms are intended to encompass different orientations of an apparatus in use, operation, and/or manufacture in addition to the orientation depicted in the drawings. For example, if the sheet in the drawings is turned over, elements described as "below" or "beneath" other elements or features would then be oriented "on" or "above" the other elements or features. Thus, the exemplary term "below" or "beneath" can encompass both an orientation of above and below.

In addition, as used herein, the terms "monomeric product" and "monomer" have the same meaning. In the context of the invention, a monomer is distinguished from oligomers and polymers and is a compound having a weight average molecular weight of 1,000 or less.

In addition, as used herein, a monomer may include a polymerizable functional group, for example, a (meth)acrylate group, and may be classified into monofunctional (f=1), bifunctional (f=2), trifunctional (f=3), and tetra- or higher functional (f≥4) based on the number of polymerizable functional groups contained within one molecule.

In addition, as used herein, "(meth)acrylate" refers to acrylate and methacrylate, "(meth)acryl" refers to acryl and methacryl, "(meth)acryloyl" refers to acryloyl and methacryloyl, and "(meth)allyl" refers to allyl and methallyl.

Hereinafter, exemplary embodiments of the invention will be described in detail with reference to the accompanying drawings. However, it should be understood that the drawings appended to this specification are intended to illustrate the exemplary embodiments such that the technical concept of the invention can be fully understood in conjunction with the following description of the invention. Accordingly, the invention should not be interpreted as being limited to the matter illustrated in the drawings.

FIG. 1 is a cross-sectional view of a laminate structure of a quantum dot optical sheet according to the present invention.

Referring to FIG. 1, the quantum dot optical sheet according to the present invention includes a first substrate 100-1; a first barrier layer 200-1 formed on the first substrate; a second substrate 100-2 disposed opposite the first substrate; a second barrier layer 200-2 formed on the second substrate; and a photoconversion layer 300 interposed between the first barrier layer and the second barrier layer.

Preferably, the substrate 100 includes a light transmissive resin having good light transmittance and may have a light transmittance of, for example, 85% to 100% at a wavelength of 550 nm.

The substrate 100 may be formed of, for example, polyethylene terephthalate (PET), polyethylene naphthalate, an acrylic resin, polystyrene, polycarbonate (PC), a cyclic olefin polymer, and the like. Preferably, the substrate 100 is formed of polyethylene terephthalate (PET) in terms of excellent transparency, strength, and flexibility.

The substrate may be prepared in the form of a single layer or a multilayer structure of two or more layers and may have a thickness of, for example, 10 µm to 200 µm, without being limited thereto.

The barrier layer 200 serves to protect the photoconversion layer 300 containing quantum dots from an external environment and may be formed to directly contact the photoconversion layer 300.

The barrier layer 200 includes a cured product of a composition for barrier layers, which includes a (meth)allyl based monomer, a monomer having at least two thiol groups at terminal ends thereof, metal oxide nanoparticles, and a first photoinitiator.

The (meth)allyl based monomer may include at least one selected from the group consisting of triallyl isocyanurate, 1,3-diallyl-5-glycidyl isocyanurate, diallylpropyl isocyanurate, and trimethallyl isocyanurate, preferably triallyl isocyanurate.

The (meth)allyl based monomer may be present in an amount of 10 wt% to 70 wt%, preferably 20 wt% to 60 wt%, based on the total weight of the composition for barrier layers.

The monomer having at least two thiol groups at the terminal ends thereof may include at least one selected from the group consisting of pentaerythritol tetrakis(2-mercaptoacetate), pentaerythritol tetrakis(3-mercaptopropionate), 1,2-ethanedithiol, pentaerythritol tetrakis(mercaptopropionate), pentaerythritol tetrakis(thioglycolate), trimethylolpropane tris(2-mercaptoacetate), and trimethylolpropane tris(3-mercaptopropionate), preferably pentaerythritol tetrakis(2-mercaptoacetate).

The monomer having at least two thiol groups at the terminal ends thereof may be present in an amount of 15 wt% to 85 wt%, preferably 30 wt% to 70 wt%, based on the total weight of the composition for barrier layers.

The metal oxide nanoparticles may include at least one selected from the group consisting of titanium oxide, aluminum oxide, chromium trioxide, zinc oxide, copper oxide, magnesium oxide, zirconium dioxide, molybdenum trioxide, vanadium pentoxide, niobium pentoxide, and tantalum pentoxide, preferably aluminum oxide (alumina, Al₂O₃).

The metal oxide nanoparticles may be present in an amount of 0.1 wt% to 20 wt%, preferably 1 wt% to 15 wt%, based on the total weight of the composition for barrier layers.

The first photoinitiator may be any type of photoinitiator so long as the photoinitiator can generate radicals through excitation by a light source, such as ultraviolet (UV) light and the like. The first photoinitiator may include, for example, an acetophenone based compound, a benzophenone based compound, a thioxanthone based compound, a benzoin based compound, a triazine based compound, or an oxime based compound.

The first photoinitiator may include, for example, ethyl(2,4,6-trimethylbenzoyl)phenylphosphinate, Irgacure 184, Irgacure 369, Irgacure 651, Irgacure 819, Irgacure 907, Irgacure TPO, TPO-L, benzoinalkylether, benzophenone, benzyl dimethyl ketal, hydroxycyclohexyl phenyl acetone, chloroacetophenone, 1,1-dichloro acetophenone, diethoxy acetophenone, hydroxy acetophenone, 2-chloro thioxanthone, 2-ETAQ (2-ethylanthraquinone), 1-hydroxy-cyclohexyl-phenyl-ketone, 2-hydroxy-2-methyl-1-phenyl-1-propanone, 2-hydroxy-1-[4-(2-hydroxyethoxy)phenyl]-2-methyl-1-propanone, methyl benzoyl formate, and the like, without being limited thereto. These photoinitiators may be used alone or as a mixture thereof.

The first photoinitiator may be present in an amount of 0.1 wt% to 5 wt%, preferably 0.5 wt% to 3 wt%, based on the total weight of the composition for barrier layers.

In the barrier layer 200, heat resistant metal oxide nanoparticles are dispersed in a polymer matrix having enhanced barrier characteristics to secure excellent properties in terms of both thermal stability and barrier characteristics, whereby the barrier layer 200 can replace high cost conventional barrier films (for example, products of I-Components Co., Ltd., Dai Nippon Printing (DNP) Co., Ltd., and the like), to which conventional deposition techniques or special coatings are applied.

The barrier layer 200 may have any thickness so long as the barrier layer 200 can protect the photoconversion layer 300 from an external environment. For example, the barrier layer 200 may have a thickness of 10 µm to 100 µm. Within this range, the barrier layer 200 can ensure sufficient barrier characteristics without curling after curing, thereby preventing defects caused by curling.

The photoconversion layer 300 is interposed between the first barrier layer 200-1 and the second barrier layer 200-2 and directly contacts at least one of the first barrier layer 200-1 and the second barrier layer 200-2.

The photoconversion layer 300 includes a cured product of a composition for photoconversion layers, which includes quantum dots, a bisphenol based monomer, a cyclizable monomer, and a second photoinitiator, wherein the quantum dots are dispersed within a polymer matrix formed by photocuring the monomers.

The quantum dots (QDs) are nanoscale semiconductor materials that can have different energy bandgaps depending on the size and composition thereof and thus can emit light with different emission wavelengths.

These quantum dots may have a homogeneous monolayer structure, a multilayer structure, such as a core-shell structure, a gradient structure, and the like, or a mixture thereof. When the shell has a multilayer structure, each layer may contain a different component, for example, a metal (metalloid) oxide.

The quantum dots (QDs) may be freely selected from among a Group II-VI compound, a Group III-V compound, a Group IV-VI compound, a Group IV element, a Group IV compound, and combinations thereof. When the quantum dots are prepared in the form of a core-shell structure, each of the core and the shell may be freely selected from components exemplified below.

In one example, the Group II-VI compound may be selected from the group consisting of a binary compound selected from the group consisting of CdO, CdS, CdSe, CdTe, ZnO, ZnS, ZnSe, ZnTe, HgS, HgSe, HgTe, MgSe, MgS, and mixtures thereof; a ternary compound selected from the group consisting of CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, and mixtures thereof; and a quaternary compound selected from the group consisting of CdZnSeS, CdZnSeTe, CdZnSTe, CdHgSeS, CdHgSeTe, CdHgSTe, HgZnSeS, HgZnSeTe, HgZnSTe, and mixtures thereof.

In another example, the Group III-V compound may be selected from the group consisting of a binary compound selected from the group consisting of GaN, GaP, GaAs, GaSb, AlN, AlP, AlAs, AlSb, InN, InP, InAs, InSb, and mixtures thereof; a ternary compound selected from the group consisting of GaNP, GaNAs, GaNSb, GaPAs, GaPSb, AlNP, AlNAs, AlNSb, AlPAs, AlPSb, InNP, InNAs, InNSb, InPAs, InPSb, and mixtures thereof; and a quaternary compound selected from the group consisting of GaAlNP, GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb, and mixtures thereof.

In another example, the Group IV-VI compound may be selected from the group consisting of a binary compound selected from the group consisting of SnS, SnSe, SnTe, PbS, PbSe, PbTe, and mixtures thereof; a ternary compound selected from the group consisting of SnSeS, SnSeTe, SnSTe, PbSeS, PbSeTe, PbSTe, SnPbS, SnPbSe, SnPbTe, and mixtures thereof; and a quaternary compound selected from the group consisting of SnPbSSe, SnPbSeTe, SnPbSTe, and mixtures thereof.

In another example, the Group IV element may be selected from the group consisting of Si, Ge, and mixtures thereof. The Group IV compound may be a binary compound selected from the group consisting of SiC, SiGe, and mixtures thereof.

The aforementioned binary, ternary, or quaternary compound may be present in particles at a uniform concentration or at partially different concentrations. The quantum dots may also have a core/shell structure in which one quantum dot surrounds another quantum dot. The interface between the core and the shell may have a concentration gradient in which the concentration of an element in the shell gradually decreases toward the center thereof.

The quantum dots may have any shape commonly used in the art. For example, the quantum dots may be nanoparticles, nanotubes, nanowires, nanofibers, or nano-platelets having a spherical shape, a rod shape, a pyramidal shape, a disc shape, a multi-armed shape, a cubic shape, and the like.

In addition, the size of the quantum dots is not particularly limited and may be suitably adjusted within a typical range well-known in the art. For example, the quantum dots may have an average particle diameter (D50) of about 2 nm to about 10 nm. As such, when the average particle diameter of the quantum dots is adjusted within the range of about 2 nm to about 10 nm, the quantum dots can emit light of a desired color. For example, when InP-containing quantum dot core/shell has a particle diameter of about 5 nm to about 6 nm, the quantum dots can emit light having a wavelength of about 520 nm to about 550 nm. On the other hand, when the InP-containing quantum dot core/shell has a particle diameter of about 7 nm to about 8 nm, the quantum dots can emit light having a wavelength of about 620 nm to about 640 nm. For example, cadmium (Cd)-free Group III-V quantum dots (QDs) (for example, InP, InGaP, InZnP, GaN, GaAs, or GaP) may be used as blue-emitting quantum dots.

The quantum dots may also have a full width at half maximum (FWHM) of about 40 nm or less in the emission wavelength spectrum thereof. Within this range, it is possible to improve color purity or color reproduction. Furthermore, light emitted from the quantum dots travels in all directions, thereby improving light viewing angle.

The quantum dots may be present in an amount of 0.1 wt% to 30 wt%, preferably 1 wt% to 20 wt%, based on the total weight of the composition for photoconversion layers.

The quantum dots have a ligand layer on a surface thereof, in which ligands in the ligand layer serve to modify the surfaces of the quantum dots. Since hydrophobic properties of the surfaces of the quantum dots provide a barrier to dispersion of the quantum dots in a photopolymerizable monomer, miscibility of the quantum dots with respect to the photopolymerizable monomer can be improved through surface modification of the quantum dots with suitable ligands.

The ligand layer may include at least one selected from the group consisting of a carboxylic acid based compound, a thiol based compound, a phosphine based compound, a phosphine oxide based compound, and an amine based compound. Preferably, the ligand layer includes a carboxylic acid based compound, a phosphine based compound, a phosphine oxide based compound, and an amine based compound.

The carboxylic acid based compound may include at least one selected from the group consisting of formic acid, acetic acid, propanoic acid, butanoic acid, pentanoic acid, hexanoic acid, heptanoic acid, octanoic acid, dodecanoic acid, hexadecanoic acid, octadecanoic acid, oleic acid, and benzoic acid, preferably oleic acid.

The thiol based compound may include at least one selected from the group consisting of methanethiol, ethanethiol, propanethiol, butanethiol, pentanethiol, hexanethiol, octanethiol, dodecanethiol, hexadecanethiol, octadecanethiol, and benzyl thiol.

The phosphine based compound may include at least one selected from the group consisting of methylphosphine, ethylphosphine, propylphosphine, butylphosphine, pentylphosphine, octylphosphine, dioctylphosphine, tributylphosphine, and trioctylphosphine, preferably trioctylphosphine.

The phosphine oxide based compound may include at least one selected from the group consisting of phosphine oxide, methylphosphine oxide, ethylphosphine oxide, propylphosphine oxide, butylphosphine oxide, pentylphosphine oxide, tributylphosphine oxide, octylphosphine oxide, dioctylphosphine oxide, and trioctylphosphine oxide, preferably trioctylphosphine oxide.

The amine based compound may include at least one selected from the group consisting of decylamine, tetradecylamine, dodecylamine, hexadecylamine, octadecylamine, oleylamine, octylamine, and trioctylamine, preferably trioctylamine.

The bisphenol based monomer may include at least one selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A), 2,2-bis(4-hydroxyphenyl)butane, 1,1-bis(4-hydroxyphenyl)cyclohexane (bisphenol Z), 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane.

The bisphenol based monomer may be present in an amount of 5 wt% to 60 wt%, preferably 10 wt% to 50 wt%, based on the total weight of the composition for photoconversion layers.

The cyclizable monomer refers to a monomer that can form a ring structure upon polymerization so as to obtain a polymer having a ring structure. The cyclizable monomer may include at least one selected from the group consisting of alkyl 2-[(allyloxy)methyl](meth)acrylate, hydroxyalkyl 2-[(allyloxy)methyl](meth)acrylate, haloalkyl 2-[(allyloxy)methyl](meth)acrylate, cycloalkyl 2-[(allyloxy)methyl](meth)acrylate, aryl 2-[(allyloxy)methyl](meth)acrylate, alkoxyalkyl 2-[(allyloxy)methyl](meth)acrylate, alkoxycycloalkyl 2-[(allyloxy)methyl](meth)acrylate, and oxacycloalkyl 2-[(allyloxy)methyl](meth)acrylate, preferably alkyl 2-[(allyloxy)methyl](meth)acrylate.

The alkyl 2-[(allyloxy)methyl](meth)acrylate may include at least one selected from the group consisting of methyl 2-[(allyloxy)methyl](meth)acrylate, ethyl 2-[(allyloxy)methyl](meth)acrylate, propyl 2-[(allyloxy)methyl](meth)acrylate, butyl 2-[(allyloxy)methyl](meth)acrylate, pentyl 2-[(allyloxy)methyl](meth)acrylate, hexyl 2-[(allyloxy)methyl](meth)acrylate, heptyl 2-[(allyloxy)methyl](meth)acrylate, octyl 2-[(allyloxy)methyl](meth)acrylate, ethylhexyl 2-[(allyloxy)methyl](meth)acrylate, nonyl 2-[(allyloxy)methyl](meth)acrylate, and decyl 2-[(allyloxy)methyl](meth)acrylate.

The hydroxyalkyl 2-[(allyloxy)methyl](meth)acrylate may include at least one selected from the group consisting of hydroxymethyl 2-[(allyloxy)methyl](meth)acrylate, hydroxyethyl 2-[(allyloxy)methyl](meth)acrylate, hydroxypropyl 2-[(allyloxy)methyl](meth)acrylate, hydroxybutyl 2-[(allyloxy)methyl](meth)acrylate, hydroxypentyl 2-[(allyloxy)methyl](meth)acrylate, hydroxyhexyl 2-[(allyloxy)methyl](meth)acrylate, hydroxyheptyl 2-[(allyloxy)methyl](meth)acrylate, hydroxyoctyl 2-[(allyloxy)methyl](meth)acrylate, hydroxyethylhexyl 2-[(allyloxy)methyl](meth)acrylate, hydroxynonyl 2-[(allyloxy)methyl](meth)acrylate, and hydroxydecyl 2-[(allyloxy)methyl](meth)acrylate.

The haloalkyl 2-[(allyloxy)methyl](meth)acrylate may include at least one selected from the group consisting of fluoroethyl 2-[(allyloxy)methyl](meth)acrylate, difluoroethyl 2-[(allyloxy)methyl](meth)acrylate, chloroethyl 2-[(allyloxy)methyl](meth)acrylate, dichloroethyl 2-[(allyloxy)methyl](meth)acrylate, bromoethyl 2-[(allyloxy)methyl](meth)acrylate, and dibromoethyl 2-[(allyloxy)methyl](meth)acrylate.

The cycloalkyl 2-[(allyloxy)methyl](meth)acrylate may include at least one selected from the group consisting of cyclopentyl 2-[(allyloxy)methyl](meth)acrylate, cyclopentylmethyl 2-[(allyloxy)methyl](meth)acrylate, cyclohexyl 2-[(allyloxy)methyl](meth)acrylate, cyclohexylmethyl 2-[(allyloxy)methyl](meth)acrylate, tricyclodecanyl 2-[(allyloxy)methyl](meth)acrylate, isobornyl 2-[(allyloxy)methyl](meth)acrylate, and dicyclopentanyl 2-[(allyloxy)methyl](meth)acrylate.

The aryl 2-[(allyloxy)methyl](meth)acrylate may include at least one selected from the group consisting of phenyl 2-[(allyloxy)methyl](meth)acrylate, methylphenyl 2-[(allyloxy)methyl](meth)acrylate, dimethylphenyl 2-[(allyloxy)methyl](meth)acrylate, trimethylphenyl 2-[(allyloxy)methyl](meth)acrylate, butylphenyl 2-[(allyloxy)methyl](meth)acrylate, benzyl 2-[(allyloxy)methyl](meth)acrylate, diphenylmethyl 2-[(allyloxy)methyl](meth)acrylate, diphenylethyl 2-[(allyloxy)methyl](meth)acrylate, triphenylmethyl 2-[(allyloxy)methyl](meth)acrylate, naphthyl 2-[(allyloxy)methyl](meth)acrylate, and anthranyl 2-[(allyloxy)methyl](meth)acrylate.

The alkoxyalkyl 2-[(allyloxy)methyl](meth)acrylate may include at least one selected from the group consisting of methoxyethyl 2-[(allyloxy)methyl](meth)acrylate, methoxyethoxyethyl 2-[(allyloxy)methyl](meth)acrylate, methoxybutyl 2-[(allyloxy)methyl](meth)acrylate, ethoxyethyl 2-[(allyloxy)methyl](meth)acrylate, and ethoxyethoxyethyl 2-[(allyloxy)methyl](meth)acrylate.

The alkoxycycloalkyl 2-[(allyloxy)methyl](meth)acrylate may include at least one selected from the group consisting of methoxycyclopentyl 2-[(allyloxy)methyl](meth)acrylate, ethoxycyclopentyl 2-[(allyloxy)methyl](meth)acrylate, methoxycyclohexyl 2-[(allyloxy)methyl](meth)acrylate, ethoxycyclohexyl 2-[(allyloxy)methyl](meth)acrylate, and dicyclopentenyloxyethyl 2-[(allyloxy)methyl](meth)acrylate.

The oxacycloalkyl 2-[(allyloxy)methyl](meth)acrylate may include at least one selected from the group consisting of glycidyl 2-[(allyloxy)methyl](meth)acrylate, methylglycidyl 2-[(allyloxy)methyl](meth)acrylate, ethylglycidyl 2-[(allyloxy)methyl](meth)acrylate, 3,4-epoxycyclohexylmethyl 2-[(allyloxy)methyl](meth)acrylate, oxetanemethyl 2-[(allyloxy)methyl](meth)acrylate, tetrahydrofuranyl 2-[(allyloxy)methyl](meth)acrylate, tetrahydropyranyl 2-[(allyloxy)methyl](meth)acrylate, and dioxanyl 2-[(allyloxy)methyl](meth)acrylate.

The cyclizable monomer may be present in an amount of 1 wt% to 40 wt%, preferably 5 wt% to 30 wt%, based on the total weight of the composition for photoconversion layers.

The second photoinitiator may be any type of photoinitiator so long as the photoinitiator can generate radicals through excitation by a light source, such as ultraviolet (UV) light and the like. The second photoinitiator may include, for example, an acetophenone based compound, a benzophenone based compound, a thioxanthone based compound, a benzoin based compound, a triazine based compound, or an oxime based compound.

The second photoinitiator may include, for example, ethyl(2,4,6-trimethylbenzoyl)phenylphosphinate, Irgacure 184, Irgacure 369, Irgacure 651, Irgacure 819, Irgacure 907, Irgacure TPO, TPO-L, benzionalkylether, benzophenone, benzyl dimethyl katal, hydroxycyclohexyl phenyl acetone, chloroacetophenone, 1,1-dichloro acetophenone, diethoxy acetophenone, hydroxy acetophenone, 2-chloro thioxanthone, 2-ETAQ (2-ethylanthraquinone), 1-hydroxy-cyclohexyl-phenyl-ketone, 2-hydroxy-2-methyl-1-phenyl-1-propanone, 2-hydroxy-1-[4-(2-hydroxyethoxy)phenyl]-2-methyl-1-propanone, methylbenzoylformate, and the like. These photoinitiators may be used alone or as a mixture thereof.

The second photoinitiator may be present in an amount of 0.1 wt% to 5 wt%, preferably 0.5 wt% to 3 wt%, based on the total weight of the composition for photoconversion layers.

In one embodiment, the composition for photoconversion layers may further include at least one selected from the group consisting of a bifunctional (meth)acrylate monomer, a trifunctional (meth)acrylate monomer, and a tetra- or higher functional (meth)acrylate monomer. Preferably, the composition for photoconversion layers may further include a bifunctional (meth)acrylate monomer, a trifunctional (meth)acrylate monomer, and a tetra- or higher functional (meth)acrylate monomer.

By including the bifunctional, trifunctional, tetra- or higher functional (meth)acrylate monomers, the composition can form a denser three-dimensional network crosslinking structure due to a large number of functional groups in the molecule. With this structure, it is possible to realize improvement in crosslinking density and glass transition temperature (Tg) of the matrix.

Examples of the bifunctional (meth)acrylate monomers may include ethylene glycol di(meth)acrylate, propylene glycol di(meth)acrylate, polyolefin glycol di(meth)acrylate, ethoxylated polypropylene glycol di(meth)acrylate, 2-hydroxy-3-acryloyloxypropylmethacrylate, 2-hydroxy-1,3-dimethacryloxypropane, dioxane glycol di(meth)acrylate, tricyclodecanedimethanol di(meth)acrylate, 1,4-butanediol di(meth)acrylate, glycerin di(meth)acrylate, 1,6-hexanediol di(meth)acrylate, 1,9-nonanediol di(meth)acrylate, 1,10-decanediol di(meth)acrylate, neopentyl glycol di(meth)acrylate, 2-methyl-1,8-octanediol di(meth)acrylate, 1,9-nonanediol di(meth)acrylate, butyl ethylpropanediol di(meth)acrylate, and 3-methyl-1,5-pentanediol di(meth)acrylate, and the like, without being limited thereto.

Examples of the trifunctional (meth)acrylate monomers may include ethoxylated glycerin tri(meth)acrylate, trimethylolpropane tri(meth)acrylate, ethoxylated trimethylolpropane tri(meth)acrylate, propoxylated trimethylolpropane tri(meth)acrylate, and pentaerythritol tri(meth)acrylate, and the like, without being limited thereto.

Examples of the polyfunctional (meth)acrylate monomers may include tetrafunctional (meth)acrylate monomers, such as pentaerythritol tetra(meth)acrylate, ditrimethylolpropane tetra(meth)acrylate, ethoxylated pentaerythritol tetra(meth)acrylate; pentafunctional (meth)acrylate monomers, such as dipentaerythritol pentaacrylate, propionic acid-modified dipentaerythritol pentaacrylate, dipentaerythritol pentamethacrylate, propionic acid-modified dipentaerythritol pentamethacrylate, and the like; hexafunctional (meth)acrylate monomers, such as dipentaerythritol hexaacrylate, caprolactone-modified dipentaerythritol hexaacrylate, dipentaerythritol hexamethacrylate, caprolactone-modified dipentaerythritol hexamethacrylate, and the like, without being limited thereto.

When the composition for photoconversion layers further includes at least one selected from the group consisting of the bifunctional (meth)acrylate monomer, the trifunctional (meth)acrylate monomer, and the tetra- or higher functional (meth)acrylate monomer, these (meth)acrylate monomers may be present in an amount of 5 wt% to 60 wt%, preferably 10 wt% to 50 wt%, based on the total weight of the composition for photoconversion layers.

The photoconversion layer 300 may have any thickness. Preferably, the photoconversion layer 300 has a thickness of 10 µm to 100 µm. If the photoconversion layer is too thick, oxygen or moisture can permeate the optical sheet through side edges thereof and can deteriorate properties of the optical sheet while increasing manufacturing costs, thereby limiting application of the optical sheet to a display device. If the photoconversion layer is too thin, the quantum dots cannot sufficiently absorb light emitted from a backlight unit, causing deterioration in photoconversion efficiency. Therefore, it is desirable that the photoconversion layer 300 satisfy the above thickness range.

In one embodiment, the quantum dot optical sheet may have a luminance retention rate (ΔLm) of 95% or more; an x-axis color coordinate change (ΔCx) of - 0.005 ≤ ΔCx ≤ 0.005; and a y-axis color coordinate change (ΔCy) of -0.005 ≤ ΔCy ≤ 0.005, after being exposed to light at a wavelength of 450 nm for 616 hours.

Preferably, the quantum dot optical sheet has a luminance retention rate (ΔLm) of 100% or more; an x-axis color coordinate change (ΔCx) of -0.001 ≤ ΔCx ≤ 0.001; and a y-axis color coordinate change (ΔCy) of -0.002 ≤ ΔCy ≤ 0.002, after being exposed to light at a wavelength of 450 nm for 616 hours.

In one embodiment, the quantum dot optical sheet may have a luminance retention rate (ΔLm) of 90% or more; an x-axis color coordinate change (ΔCx) of - 0.015 ≤ ΔCx ≤ 0.015; and a y-axis color coordinate change (ΔCy) of -0.015 ≤ ΔCy ≤ 0.015, after being exposed to a condition of 60°C and 95% humidity for 616 hours.

Preferably, the quantum dot optical sheet has a luminance retention rate (ΔLm) of 91% or more; an x-axis color coordinate change (ΔCx) of -0.006 ≤ ΔCx ≤ 0.006; and a y-axis color coordinate change (ΔCy) of -0.011 ≤ ΔCy ≤ 0.011 after being exposed to a condition of 60°C and 95% humidity for 616 hours.

In one embodiment, the quantum dot optical sheet may have a luminance retention rate (ΔLm) of 90% or more; an x-axis color coordinate change (ΔCx) of - 0.010 ≤ ΔCx ≤ 0.010; and a y-axis color coordinate change (ΔCy) of -0.010 ≤ ΔCy ≤ 0.010, after being exposed to a condition of 60°C for 616 hours.

Preferably, the quantum dot optical sheet may have a luminance retention rate (ΔLm) of 93% or more; an x-axis color coordinate change (ΔCx) of -0.007 ≤ ΔCx ≤ 0.007; and a y-axis color coordinate change (ΔCy) of -0.008 ≤ ΔCy ≤ 0.008, after being exposed to a condition of 60°C for 616 hours.

The luminance retention rate (ΔLm) refers to a retention rate of luminance (Lm₂) of the quantum dot optical sheet, as measured at a certain point in time after the quantum dot optical sheet is exposed to light at a wavelength of 450 nm or to a condition of 60°C and/or 95% humidity, relative to initial luminance (Lm₁) of the quantum dot optical sheet, as measured before the quantum dot optical sheet is exposed to light at a wavelength of 450 nm or to a condition of 60°C and/or 95% humidity.

The luminance retention rate (ΔLm) may be calculated according to Equation 1.$Δ Lm \left(%\right) = \frac{{Lm}_{2}}{{Lm}_{1}} \times 100$

In Equation 1,
Lm₁ denotes an initial luminance value of the quantum dot optical sheet, and
Lm₂ denotes a luminance value of the quantum dot optical sheet, as measured at a certain point in time after the quantum dot optical sheet is exposed to light at a wavelength of 450 nm or to a condition of 60°C and/or 95% humidity.

The color coordinate change (ΔCx, ΔCy) refers to a deviation between initial color coordinates (Cx₁, Cy₁), as measured before the quantum dot optical sheet is exposed to light at a wavelength of 450 nm or to a condition of 60°C and/or 95% humidity, and color coordinates (Cx₂, Cy₂), as measured at a certain point in time after the quantum dot optical sheet is exposed to light at a wavelength of 450 nm or to a condition of 60 °C and/or 95% humidity.

The x-axis color coordinate change (ΔCx) may be calculated according to Equation 2 and the y-axis color coordinate change (ΔCy) may be calculated according to Equation 3.$Δ Cx = {Cx}_{2} - {Cx}_{1}$$Δ Cy = {Cy}_{2} - {Cy}_{1}$

In Equations 2 and 3,
Cx₁ and Cy₁ denote the initial color coordinates of the quantum dot optical sheet, and
Cx₂ and Cy₂ denote the color coordinates of the quantum dot optical sheet, as measured at a specific point in time after the quantum dot optical sheet is exposed to light at a wavelength of 450 nm or to a condition of 60°C and/or 95% humidity.

The present invention provides a backlight unit including the quantum dot optical sheet.

The backlight unit may be a backlight unit (BLU) including: a quantum dot optical sheet; a light source unit including a light source adapted to generate light; and a light guide plate adapted to guide the light. Here, the backlight unit may further include an optical member and a reflective sheet.

The present invention also provides a display device including the backlight unit. The display device may include a liquid crystal display (LCD), an electroluminescent (EL) display, a plasma display panel (PDP), a field emission display (FED), an organic light emitting diode display (OLED), and the like, without being limited thereto.

### [Mode for Invention]

Next, the present invention will be described in more detail with reference to some examples. It should be understood that these examples are provided for illustration only and are not to be construed in any way as limiting the invention.

### <EXAMPLES>

### Preparative Example 1: Preparation of Composition A for barrier layer

Composition A for barrier layers was prepared by dispersing 40 g of triallyl isocyanurate with 5 g of alumina (Al₂O₃, specific surface area: 85 m²/g to 115 m²/g), followed by mixing 1 g of Irgacure TPO and 54 g of pentaerythritol tetrakis(2-mercaptoacetate) therewith.

### Preparative Example 2: Preparation of Composition B for barrier layer

Composition B for barrier layers was prepared by dispersing 40 g of triallyl isocyanurate with 1 g of alumina (Al₂O₃, specific surface area: 85 m²/g to 115 m²/g), followed by mixing 1 g of Irgacure TPO and 58 g of pentaerythritol tetrakis(2-mercaptoacetate) therewith.

### Preparative Example 3: Preparation of Composition C for barrier layer

Composition C for barrier layers was prepared by mixing 40 g of triallyl isocyanurate with 1 g of Irgacure TPO and 59 g of pentaerythritol tetrakis(2-mercaptoacetate).

### Preparative Example 4: Preparation of ligand-exchanged InP quantum dot dispersion

InP quantum dots, surfaces of which are linked with mixed organic ligands of oleic acid, trioctylphosphine (TOP), trioctylphosphine oxide (TOPO), and trioctylamine through coordinate bonding, were dispersed and dissolved in isobornyl acrylate to obtain 5 ml of a solution containing quantum dots dispersed therein. Thereafter, 5 ml of glycol di(3-mercaptopropionate) was added to 5 ml of the solution containing the quantum dots, followed by stirring at room temperature for 1 hour, thereby preparing a quantum dot dispersion.

### Preparative Example 5: Preparation of Composition 1 for photoconversion layer

A photoreactive mixture was prepared by mixing 32 parts by weight of monomer A-1, 20 parts by weight of monomer A-2, 18 parts by weight of monomer B-1, 10 parts by weight of monomer B-2, 10 parts by weight of monomer B-3, and 1 part by weight of TPO as a photoinitiator, and was then mixed with the quantum dot dispersion of Preparative Example 4 so as to have 9 parts by weight of the quantum dots, thereby preparing Composition 1 for photoconversion layers.

### Preparative Example 6: Preparation of Composition 2 for photoconversion layer

A photoreactive mixture was prepared by mixing 20 parts by weight of monomer A-1, 32 parts by weight of monomer A-3, 18 parts by weight of monomer B-1, 10 parts by weight of monomer B-2, 10 parts by weight of monomer B-3, and 1 part by weight of TPO as a photoinitiator, and was then mixed with the quantum dot dispersion of Preparative Example 4 above so as to have 9 parts by weight of the quantum dots, thereby preparing Composition 2 for photoconversion layers.

The monomers used in Preparative Examples 5 and 6 are summarized in the following Table 1.

**Table 1**

| Item | Monomer | Remark |
|---|---|---|
| A-1 | (Bisphenol based monomer) Ethoxylated bisphenol A diacrylate | f=2, Mw: 512 g/mol, Tg: 42°C |
| A-2 | (Cyclizable monomer) Methyl 2-((allyloxy)methyl)acrylate | f=2, Mw: 156 g/mol, Tg: 84°C |
| A-3 | (Thiol based monomer) Pentaerythritol tetrakis(3-mercaptopropionate) | f=4, Mw: 488 g/mol |
| B-1 | (Trifunctional acrylate monomer) Trimethylolpropane triacrylate | f=3, Mw: 296 g/mol, Tg: 62°C |
| B-2 | (Polyfunctional acrylate monomer) Dipentaerythritol pentaacrylate | f=5, Mw: 524 g/mol, Tg: 68°C |
| B-3 | (Bifunctional acrylate monomer) 1,6-hexanediol diacrylate | f=2, Mw: 226 g/mol, Tg: 43°C |

### Example 1: Preparation of quantum dot optical sheet 1

A 25 µm barrier layer was formed by coating Composition A for barrier layers prepared in Preparative Example 1 onto a polyethylene terephthalate (PET, 100 µm thick) substrate using a laminator, followed by UV curing.

Quantum dot optical sheet 1 was prepared by coating Composition 1 for photoconversion layers prepared in Preparative Example 5 to a thickness of 46 µm between two barrier layers prepared above, followed by irradiation with UV light at a dose of 80 mJ/cm² for 4 seconds to form a photoconversion layer.

### Example 2: Preparation of quantum dot optical sheet 2

A 25 µm thick barrier layer was formed by coating Composition B for barrier layers prepared in Preparative Example 2 onto a polyethylene terephthalate (PET, 100 µm thick) substrate using a laminator, followed by UV curing.

Quantum dot optical sheet 2 was prepared by coating Composition 1 for photoconversion layers prepared in Preparative Example 5 to a thickness of 46 µm between two barrier layers prepared above, followed by irradiation with UV light at a dose of 80 mJ/cm² for 4 seconds to form a photoconversion layer.

### Comparative Example 1: Preparation of quantum dot optical sheet 3

Quantum dot optical sheet 3 was prepared by coating Composition 1 for photoconversion layers prepared in Preparative Example 5 to a thickness of 46 µm between two sheets of polyethylene terephthalate (PET, thickness 100 µm) substrates, followed by irradiation with UV light at a dose of 80 mJ/cm² for 4 seconds to form a photoconversion layer.

### Comparative Example 2: Preparation of quantum dot optical sheet 4

A 25 µm barrier layer was formed by coating Composition A for barrier layers prepared in Preparative Example 1 onto a polyethylene terephthalate (PET, 100 µm thick) substrate using a laminator, followed by UV curing.

Quantum dot optical sheet 4 was prepared by coating Composition 2 for photoconversion layers prepared in Preparative Example 6 to a thickness of 46 µm between two barrier layers prepared above, followed by irradiation with UV light at a dose of 80 mJ/cm² for 4 seconds to form a photoconversion layer.

### Comparative Example 3: Preparation of quantum dot optical sheet 5

A 25 µm barrier layer was formed by coating Composition B for barrier layers prepared in Preparative Example 2 onto a polyethylene terephthalate (PET, 100 µm thick) substrate using a laminator, followed by UV curing.

Quantum dot optical sheet 5 was prepared by coating Composition 2 for photoconversion layers prepared in Preparative Example 6 to a thickness of 46 µm between two barrier layers prepared above, followed by irradiation with UV light at a dose of 80 mJ/cm² for 4 seconds to form a photoconversion layer.

### Comparative Example 4: Preparation of quantum dot optical sheet 6

A 25 µm barrier layer was formed by coating Composition C for barrier layers prepared in Preparative Example 3 onto a polyethylene terephthalate (PET, 100 µm thick) substrate using a laminator, followed by UV curing.

Quantum dot optical sheet 6 was prepared by coating Composition 1 for photoconversion layers prepared in Preparative Example 5 to a thickness of 46 µm between two barrier layers prepared above, followed by irradiation with UV light at a dose of 80 mJ/cm² for 4 seconds to form a photoconversion layer.

### Comparative Example 5: Preparation of quantum dot optical sheet 7

A 25 µm barrier layer was formed by coating Composition C for barrier layers prepared in Preparative Example 3 onto a polyethylene terephthalate (PET, 100 µm thick) substrate using a laminator, followed by UV curing.

Quantum dot optical sheet 7 was prepared by coating Composition 2 for photoconversion layers prepared in Preparative Example 6 to a thickness of 46 µm between two barrier layers prepared above, followed by irradiation with UV light at a dose of 80 mJ/cm² for 4 seconds to form a photoconversion layer.

### Reference Example: Preparation of quantum dot optical sheet 8

Quantum dot optical sheet 8 was prepared by coating Composition 1 for photoconversion layers prepared in Preparative Example 5 to a thickness of 46 µm between two gas barrier films (IB-PET film, DNP, thickness 98 µm), followed by irradiation with UV light at a dose of 80 mJ/cm² for 4 seconds to form a photoconversion layer.

### <Experimental Example>

### 1. Evaluation of barrier characteristics under light exposure conditions

Each of the quantum dot optical sheets prepared in Examples, Comparative Examples, and Reference Example was exposed to blue light at a wavelength of 450 nm for 0 (initial), 15, 150, and 616 hours, followed by measuring luminance (Lm) and color coordinates (Cx, Cy) for each exposure time using an integrating sphere (Neolight IS500, PIMACS). The luminance retention rate (ΔLm), x-axis color coordinate change (ΔCx), and y-axis color coordinate change (ΔCy) were calculated according to Equations 1 to 3, and results are shown in Table 2.

**Table 2**

| | | 0 (initial) | 15 hours | 150 hours | 616 hours |
|---|---|---|---|---|---|
| Example 1 | ΔLm (%) | 100 | 106 | 110 | 102 |
| | ΔCx | 0.000 | 0.003 | 0.005 | 0.000 |
| | ΔCy | 0.000 | 0.004 | 0.008 | 0.000 |
| Example 2 | ΔLm (%) | 100 | 102 | 103 | 100 |
| | ΔCx | 0.000 | 0.002 | 0.001 | -0.001 |
| | ΔCy | 0.000 | 0.001 | 0.000 | -0.002 |
| Comparative Example 1 | ΔLm (%) | 100 | 99 | 33 | 15 |
| | ΔCx | 0.000 | -0.001 | -0.064 | -0.090 |
| | ΔCy | 0.000 | -0.003 | -0.106 | -0.144 |
| Comparative Example 2 | ΔLm (%) | 100 | 102 | 103 | 101 |
| | ΔCx | 0.000 | 0.001 | 0.001 | 0.001 |
| | ΔCy | 0.000 | 0.001 | 0.001 | -0.001 |
| Comparative Example 3 | ΔLm (%) | 100 | 101 | 103 | 81 |
| | ΔCx | 0.000 | 0.000 | 0.001 | -0.014 |
| | ΔCy | 0.000 | 0.000 | 0.002 | -0.031 |
| Comparative Example 4 | ΔLm (%) | 100 | 102 | 103 | 84 |
| | ΔCx | 0.000 | 0.001 | 0.001 | -0.010 |
| | ΔCy | 0.000 | 0.001 | 0.001 | -0.024 |
| Comparative Example 5 | ΔLm (%) | 100 | 102 | 102 | 78 |
| | ΔCx | 0.000 | 0.001 | 0.001 | -0.015 |
| | ΔCy | 0.000 | 0.001 | -0.001 | -0.034 |
| Reference Example | ΔLm (%) | 100 | 101 | 102 | 98 |
| | ΔCx | 0.000 | 0.001 | 0.001 | 0.001 |
| | ΔCy | 0.000 | 0.001 | 0.002 | -0.002 |

Referring to Table 2, it can be seen that the quantum dot optical sheets of Examples 1 and 2 had higher luminance than initial luminance and color coordinate changes within ±0.002 after being exposed to blue light at a wavelength of 450 nm for 616 hours. That is, it can be seen that the quantum dot optical sheets of Examples 1 and 2 had similar characteristics to the quantum dot optical sheet of Reference Example prepared using a typical gas barrier film, and exhibited excellent barrier characteristics upon light exposure. Conversely, it can be seen that the quantum dot optical sheets of Comparative Examples 1 to 5 had significant change in luminance retention rate and/or color coordinate change, indicating significant deterioration in barrier characteristics upon light exposure.

### 2. Evaluation of barrier characteristics under high temperature/high humidity conditions

Each of the quantum dot optical sheets prepared in Examples, Comparative Examples, and Reference Example was exposed to a condition of 60°C and 95% humidity for 0 (initial), 15, 150, and 616 hours, followed by measuring luminance (Lm) and color coordinates (Cx, Cy) for each exposure time using an integrating sphere (Neolight IS500, PIMACS). The luminance retention rate (ΔLm), x-axis color coordinate change (ΔCx), and y-axis color coordinate change (ΔCy) were calculated according to Equations 1 to 3, and results are shown in Table 3.

**Table 3**

| | | 0 (initial) | 15 hours | 150 hours | 616 hours |
|---|---|---|---|---|---|
| Example 1 | ΔLm (%) | 100 | 104 | 104 | 102 |
| | ΔCx | 0.000 | 0.002 | 0.003 | -0.001 |
| | ΔCy | 0.000 | 0.002 | 0.004 | -0.001 |
| Example 2 | ΔLm (%) | 100 | 97 | 95 | 93 |
| | ΔCx | 0.000 | -0.002 | -0.005 | -0.007 |
| | ΔCy | 0.000 | -0.005 | -0.008 | -0.008 |
| Comparative Example 1 | ΔLm (%) | 100 | 95 | 98 | 97 |
| | ΔCx | 0.000 | -0.003 | -0.002 | -0.005 |
| | ΔCy | 0.000 | -0.006 | -0.003 | -0.005 |
| Comparative Example 2 | ΔLm (%) | 100 | 98 | 90 | 87 |
| | ΔCx | 0.000 | -0.002 | -0.006 | -0.007 |
| | ΔCy | 0.000 | -0.005 | -0.015 | -0.018 |
| Comparative Example 3 | ΔLm (%) | 100 | 90 | 85 | 84 |
| | ΔCx | 0.000 | -0.005 | -0.008 | -0.010 |
| | ΔCy | 0.000 | -0.013 | -0.020 | -0.024 |
| Comparative Example 4 | ΔLm (%) | 100 | 95 | 92 | 91 |
| | ΔCx | 0.000 | -0.002 | -0.005 | -0.004 |
| | ΔCy | 0.000 | -0.007 | -0.011 | -0.011 |
| Comparative Example 5 | ΔLm (%) | 100 | 91 | 89 | 89 |
| | ΔCx | 0.000 | -0.004 | -0.005 | -0.006 |
| | ΔCy | 0.000 | -0.011 | -0.014 | -0.014 |
| Reference Example | ΔLm (%) | 100 | 101 | 102 | 98 |
| | ΔCx | 0.000 | 0.001 | 0.001 | 0.001 |
| | ΔCy | 0.000 | 0.001 | 0.002 | -0.002 |

Referring to Table 3, it can be seen that the quantum dot optical sheets of Examples 1 and 2 had a luminance retention rate of 93% or more and color coordinate changes within ±0.008, after being exposed to a condition of 60°C and 95% humidity for 616 hours. That is, it can be seen that the quantum dot optical sheets of Examples 1 and 2 had similar characteristics to the quantum dot optical sheet of Reference Example prepared using a typical gas barrier film, and exhibited excellent barrier characteristics under high temperature/high humidity conditions. Conversely, it can be seen that the quantum dot optical sheets of Comparative Examples 1 to 5 had significant change in luminance retention rate and/or color coordinate change, indicating significant deterioration in barrier characteristics under high temperature/high humidity conditions.

### 3. Evaluation of barrier characteristics under high temperature conditions

Each of the quantum dot optical sheets prepared in Examples, Comparative Examples, and Reference Example was exposed to a condition of 60°C for 0 (initial), 15, 150, and 616 hours, followed by measuring luminance (Lm) and color coordinates (Cx, Cy) for each exposure time using an integrating sphere (Neolight IS500, PIMACS). The luminance retention rate (ΔLm), x-axis color coordinate change (ΔCx), and y-axis color coordinate change (ΔCy) were calculated according to Equations 1 to 3, and results are shown in Table 4.

**Table 4**

| | | 0 (initial) | 15 hours | 150 hours | 616 hours |
|---|---|---|---|---|---|
| Example 1 | ΔLm (%) | 100 | 100 | 101 | 98 |
| | ΔCx | 0.000 | 0.000 | 0.002 | 0.000 |
| | ΔCy | 0.000 | -0.002 | 0.000 | -0.002 |
| Example 2 | ΔLm (%) | 100 | 100 | 93 | 91 |
| | ΔCx | 0.000 | 0.000 | -0.006 | -0.006 |
| | ΔCy | 0.000 | -0.002 | -0.011 | -0.011 |
| Comparative Example 1 | ΔLm (%) | 100 | 92 | 88 | 83 |
| | ΔCx | 0.000 | -0.005 | -0.008 | -0.011 |
| | ΔCy | 0.000 | -0.010 | -0.015 | -0.020 |
| Comparative Example 2 | ΔLm (%) | 100 | 99 | 91 | 84 |
| | ΔCx | 0.000 | 0.000 | -0.005 | -0.007 |
| | ΔCy | 0.000 | -0.002 | -0.014 | -0.022 |
| Comparative Example 3 | ΔLm (%) | 100 | 91 | 80 | 70 |
| | ΔCx | 0.000 | -0.004 | -0.010 | -0.017 |
| | ΔCy | 0.000 | -0.012 | -0.028 | -0.044 |
| Comparative Example 4 | ΔLm (%) | 100 | 92 | 88 | 81 |
| | ΔCx | 0.000 | -0.004 | -0.006 | -0.010 |
| | ΔCy | 0.000 | -0.011 | -0.015 | -0.026 |
| Comparative Example 5 | ΔLm (%) | 100 | 89 | 85 | 79 |
| | ΔCx | 0.000 | -0.006 | -0.008 | -0.011 |
| | ΔCy | 0.000 | -0.015 | -0.022 | -0.030 |
| Reference Example | ΔLm (%) | 100 | 101 | 101 | 98 |
| | ΔCx | 0.000 | 0.001 | 0.001 | 0.001 |
| | ΔCy | 0.000 | 0.002 | 0.002 | 0.000 |

Referring to Table 4, it can be seen that the quantum dot optical sheets of Examples 1 and 2 had a luminance retention rate of 91% or more and color coordinate changes within ±0.011 after being exposed to a condition of 60°C for 616 hours. That is, it can be seen that the quantum dot optical sheets of Examples 1 and 2 had similar characteristics to the quantum dot optical sheet of Reference Example prepared using a typical gas barrier film, and exhibited excellent barrier characteristics under a high temperature condition. Conversely, it can be seen that the quantum dot optical sheets of Comparative Examples 1 to 5 had significant change in luminance retention rate and/or color coordinate change, indicating significant deterioration in barrier characteristics under high temperature condition.

## Claims

1. A quantum dot optical sheet comprising:
a first substrate;
a first barrier layer formed on the first substrate;
a second substrate disposed opposite the first substrate;
a second barrier layer formed on the second substrate; and
a photoconversion layer interposed between the first barrier layer and the second barrier layer,
wherein each of the first barrier layer and the second barrier layer comprises a cured product of a composition for barrier layers comprising a (meth)allyl based monomer, a monomer having at least two thiol groups at terminal ends thereof, metal oxide nanoparticles, and a first photoinitiator, and
wherein the photoconversion layer comprises a cured product of a composition for photoconversion layers comprising quantum dots, a bisphenol based monomer, a cyclizable monomer, and a second photoinitiator.

2. The quantum dot optical sheet according to claim 1, wherein the (meth)allyl based monomer comprises at least one selected from the group consisting of triallyl isocyanurate, 1,3-diallyl-5-glycidyl isocyanurate, diallylpropyl isocyanurate, and trimethallyl isocyanurate.

3. The quantum dot optical sheet according to claim 1, wherein the monomer having at least two thiol groups at the terminal ends thereof comprises at least one selected from the group consisting of pentaerythritol tetrakis(2-mercaptoacetate), pentaerythritol tetrakis(3-mercaptopropionate), 1,2-ethanedithiol, pentaerythritol tetrakis(mercaptopropionate), pentaerythritol tetrakis(thioglycolate), trimethylolpropane tris(2-mercaptoacetate), and trimethylolpropane tris(3-mercaptopropionate).

4. The quantum dot optical sheet according to claim 1, wherein the metal oxide nanoparticles comprise at least one selected from the group consisting of titanium oxide, aluminum oxide, chromium trioxide, zinc oxide, copper oxide, magnesium oxide, zirconium dioxide, molybdenum trioxide, vanadium pentoxide, niobium pentoxide, and tantalum pentoxide.

5. The quantum dot optical sheet according to claim 1, wherein the quantum dots are cadmium-free quantum dots.

6. The quantum dot optical sheet according to claim 1, wherein the quantum dots have a ligand layer on a surface thereof,
the ligand layer comprising at least one selected from the group consisting of a carboxylic acid based compound, a thiol based compound, a phosphine based compound, a phosphine oxide based compound, and an amine based compound.

7. The quantum dot optical sheet according to claim 1, wherein the cyclizable monomer comprises at least one selected from the group consisting of alkyl 2-[(allyloxy)methyl](meth)acrylate, hydroxyalkyl 2-[(allyloxy)methyl](meth)acrylate, haloalkyl 2-[(allyloxy)methyl](meth)acrylate, cycloalkyl 2-[(allyloxy)methyl](meth)acrylate, aryl 2-[(allyloxy)methyl](meth)acrylate, alkoxyalkyl 2-[(allyloxy)methyl](meth)acrylate, alkoxycycloalkyl 2-[(allyloxy)methyl](meth)acrylate, and oxacycloalkyl 2-[(allyloxy)methyl](meth)acrylate.

8. The quantum dot optical sheet according to claim 1, wherein the composition for photoconversion layers further comprises at least one selected from the group consisting of a bifunctional (meth)acrylate monomer, a trifunctional (meth)acrylate monomer, and a tetra- or higher functional (meth)acrylate monomer.

9. The quantum dot optical sheet according to claim 1, wherein the quantum dot optical sheet has a luminance retention rate (ΔLm) of 95% or more; an x-axis color coordinate change (ΔCx) of -0.005 ≤ ΔCx ≤ 0.005; and a y-axis color coordinate change (ΔCy) of -0.005 ≤ ΔCy ≤ 0.005, after being exposed to light at a wavelength of 450 nm for 616 hours.

10. The quantum dot optical sheet according to claim 1, wherein the quantum dot optical sheet has a luminance retention rate (ΔLm) of 90% or more; an x-axis color coordinate change (ΔCx) of -0.010 ≤ ΔCx ≤ 0.010; and a y-axis color coordinate change (ΔCy) of -0.010 ≤ ΔCy ≤ 0.010, after being exposed to a condition of 60°C and 95% humidity for 616 hours.

11. The quantum dot optical sheet according to claim 1, wherein the quantum dot optical sheet has a luminance retention rate (ΔLm) of 90% or more; an x-axis color coordinate change (ΔCx) of -0.015 ≤ ΔCx ≤ 0.015; and a y-axis color coordinate change (ΔCy) of -0.015 ≤ ΔCy ≤ 0.015, after being exposed to a condition of 60°C for 616 hours.

12. A backlight unit comprising the quantum dot optical sheet according to any one of claims 1 to 11.

13. A display device comprising the backlight unit according to claim 12.
